Europäisches Patentamt

European Patent Office

Office européen des brevets

(11) Publication number: **0 097 063**
A1

# EUROPEAN PATENT APPLICATION

(21) Application number: **83303497.8**

(22) Date of filing: **16.06.83**

(51) Int. Cl.³: **C 08 F 20/06**, C 08 F 2/10

(30) Priority: **16.06.82 GB 8217376**

(43) Date of publication of application: **28.12.83**
**Bulletin 83/52**

(84) Designated Contracting States: **AT BE CH DE FR GB IT LI LU NL SE**

(71) Applicant: **Albright & Wilson Limited, Albright & Wilson House Hagley Road West, Oldbury Warley West Midlands, B68 0NN (GB)**

(72) Inventor: **Haughton, Michael Harry, 9 Seaton Park, Seaton Workington Cumbria (GB)**
Inventor: **Martin, Clifford George, 6 Headlands Drive, Whitehaven Cumbria (GB)**

(74) Representative: **Wilson, Michael John et al, c/o Albright & Wilson Limited 1 Knightsbridge Green, London SW1X 7QD (GB)**

(54) **Process for production of polymers of unsaturated acids.**

(57) Water soluble acrylic acid polymers useful in water treatment, and as scale inhibitors and dispersants, are made by adding a meta bisulphite salt to an aqueous solution of acrylic acid and chlorate salt and a chain terminator.

EP 0 097 063 A1

This invention related to polymers of unsaturated acids and salts thereof and methods of making them.

Polyacrylic acids and their alkali metal salts are known for use in aqueous solution for water treatment to stop deposition of solids and as dispersants and deflocculants to produce stable suspensions in e.g. minerals processing. They may also be used for sequestering metal ions such as calcium or magnesium in circumstances where polyphosphates cannot be used; they may also be anti redeposition agents in detergents. For optimum properties with each use a close control on the molecular weight of the polymer is desired. The polyacrylates may be made by polymerizing acrylic acid in water in the presence of a catalyst, which is a free radical catalyst, often in combinations with a chain terminator. The polymerization of acrylic acid in the presence of water, ammonium persulphate and 2-mercapto- ethanol or thioglycollic acid is described in USP 3787488/3904522 or 3665035/3756257 respectively. In the Examples the acrylic acid persulphate and particular thiol compound were each added in one or more separate portions to a well stirred aqueous solution. Another free radical catalyst known for emulsion polymerization of vinyl chloride, but which has not been described for solution polymerization of acrylic acid, is the combination of sodium chlorate and sodium bisulphite, as described in "Emulsion Polymerizations" by D. C. Blackley, Applied Science Publishers, London 1975 pages 216-218; theoretically the molar proportion of chlorate to metabisulphite appears to be at most 0.66 : 1 (see page 217).

One problem with the polymerization process described in the above patents is that there is a very fast substantial evolution of heat which requires that to make concentrated solutions of polymers a safe process requires very many steps of addition of the reagents which greatly increases the total reaction time. In addition the process tends to leave substantial proportions of monomer in variable amounts in the polymer necessitating extra additions of persulphate at the end which result in a high risk of undesirable branching of polymer chains.

We have found a process giving the possibility of better heat control because of slower heat evolution and capable of giving very high conversions.

The present invention provides a process for preparing a water soluble polymer, having repeating units derived from a monomer component, which comprises at least 70 molar % of acrylic acid and optionally up to 30 molar % of copolymerizable monomer, wherein to an aqueous solution comprising said monomer component, a free radical chain terminator and an ammonium or alkali metal chlorate is added in aqueous solution comprising a sulphur oxy species derived from sulphurous acid, preferably ammonium or an alkali metal metabisulphite, to form a reaction solution in which polymerization occurs and then further solution comprising said sulphur oxy species is added to cause further polymerization and the process repeated to form an aqueous solution of the said polymer. The aqueous solution may be subsequently aged, if needed, to complete the polymerization by holding it at elevated temperature in the absence of further added sulphur oxy species.

The sulphur oxy species derived from sulphurous acid is usually an ionic species from sulphurous acid or its anhydride or a precursor therefor. Thus sulphurous acid itself, or gaseous sulphur dioxide may be added as such, but preferably water soluble salts thereof are used e.g. ammonium or alkali metal such as sodium or potassium salts. The salts may be sulphites, bisulphite (or hydrogen sulphites) or the anhydrides thereof, namely meta bisulphites e.g. $Na_2 S_2 O_5$, which form bisulphite in solution and which are preferred. Precursors of the bisulphites such as dithionite which also form bisulphite in aqueous solution may be used. Hereafter in this specification reference will be made to metabisulphites but this is only for purposes of exemplification. Furthermore it is to be understood in this specification (including the claims) that while reference is made to metabisulphites and molar ratios relating thereto, the species in the polymerization medium and in the solution of metabisulphite is probably the corresponding bisulphite, one mole of meta bisulphite forming 2 moles of bisulphite, and hence when reference is made to metabisulphite, bisulphites, sulphites, sulphurous acid or sulphur dioxide or dithionite themselves should also be understood in double the given molar amounts.

The polymer product prepared by the process of the present invention is usually a water soluble polymer having repeating units derived from said monomer component, said polymer being such that when in the form of an aqueous solution at pH 7.2 of 42% concentration of the sodium salt of the polymer then said salt has $M_w$ less than 25000, $M_w/M_n$ less than 2.2 e.g. less than 2.0 (especially when $M_w$ is less than 11000) and $M_z/M_w$ usually less than 1.9 e.g. 1.4-1.9. The polymer product is in an aqueous medium, usually a solution, which comprises at least 10 or 30% (particularly at least 50%) by weight of said polymer. The polymer product may be converted into salts of said polymers particular sodium or potassium or ammonium salts, in aqueous solution of the above concentration.

The main monomer component is acrylic acid, which may be substantially water free e.g. glacial acrylic acid or may be added as aqueous acrylic acid of at least 60% acrylic content. Preferably the acrylic acid is substantially the only polymerizable monomer, but there may be up to 30 molar % e.g. 1-30 or 10-30% or 1-20% (based on the total moles of monomer component) of another copolymerizable monomer. Said monomer in the amount used forms a polymer or salt thereof with said 70% or more of acrylic acid which polymer or salt is water soluble ; said monomer is usually miscible with acrylic acid and often with water, and is generally a liquid, though solids which dissolve in acrylic acid or water may be used. Examples of such copolymerizable monomers are ethylenically unsaturated carboxylic acids of 4-8 carbon atoms with 1 or 2 carboxylic acid groups e.g. methacrylic crotonic, fumaric and maleic acids, maleic anhydride, amides of such acids such as methacrylamide and acrylamide and dialkylamino alkylene amides thereof, e.g. ones with 1-3 carbon atoms in each alkyl or alkylene group such as dimethylamino propyl (or ethyl) acrylamide, and esters of said acids with alkanols of 1 - 4 carbon atoms e.g. methanol or ethanol, such as methyl methacrylate or methyl acrylate or with alkane diols e.g. of 2-4 carbon atoms, such as 2-hydroxy ethyl- and 2- or 3- hydroxy propyl acrylate and methacrylate ; esters of said acids with alkanols of 1 - 24 carbon atoms in molar amounts of up to 10% may be used. Examples of monomer components are mixtures of 70-90 molar % acrylic acid and 10-30% molar % methyl acrylate. The monomer component (or components) are usually present in the aqueous solutio for polymerization in amounts of at least 10%n e.g. 10-65% or at leas 35% e.g. 35-55% by weight. The monomer      t component may contain small amounts of polymerization inhibitors as stabilizers e.g. 50-500 ppm hydroquinone or its monomethyl ether.

The chain terminator is a compound capable of modifying transferring or terminating free radical chains. Such compounds are known per se for this purpose with olefinic monomers and are. described for example in the Blackley text book (referred to above) pages 329-379. Preferred are thiol compounds e.g. with 1 or 2 thiol groups such as alkyl thiols of 1-8 carbon atoms, optionally with at least one hydroxyl and/or amino and/or carboxylic acid group, such as hydroxy alkane thiols (or amino alkane thiols) with 1-3 hydroxyl (or amino) groups, 1 or 2 thiol group and 2-4 carbon atoms and no OH and/or $NH_2$ and/or SH groups attached to the same carbon atoms, such as 2-mercaptoethanol 2-mercaptoethyl amine or thioglycerol, or mercapto alkane carboxylic acids of 1-6 carbon atoms with 1 or 2 carboxylic acid groups and 1 or 2 thiol groups attached to different carbon atoms, such as thioglycollic and 2 or 3 mercaptopropionic acid and thiomalic acid.

The terminator is usually soluble in acrylic acid and/or water; the terminator and chlorate/bisulphite are, if possible, added in aqueous solution. Any comonomer may be dissolved in the acrylic acid.

At the end of addition of all the initiators the molar proportion of chlorate to meta bisulphite, that has been added is usually greater than 1 : 1 e.g. 2-100 : 1, such as e.g. 2-20:1 or 3-20 : 1 or 4 - 10 : 1 . The total molar percentage of chlorate and metabisulphite added (based on moles of monomer component) is usually up to 5% e.g. 0.2-5% or 0.2-4% such as 0.6-2.6% with the molar chlorate percentage usually up to 4.5% e.g. 0.1-4.5% e.g. 0.1-3% or 0.5-2.0%. The chlorate and metabisulphite and bisulphite salts may each be ammonium, sodium or potassium salts or mixtures thereof. Still higher molar percentages of chlorate tend to give hazy, smelly polymeric products.

The molar proportion of terminator to monomer usually governs the absolute size of $M_w$, and the spread of molecular weights i.e. and a narrower spread and a lower proportion giving higher molecular weight compounds and a wider spread . Usually an amount of 0.5-20 mole % e.g. 1-20% such as 1-15 or e.g. 0.5-4% or 4-8% or 8-15% mole % of terminator (or thiol group therein) to monomer is used; thus with mercaptoethanol or thioglycollic acid a weight % of 1-20% e.g. 10-15 % (based on the weight of acrylic acid as the sole monomer) may be used.

The proportion of initiator to monomer governs the rate at which monomer is consumed and hence the degree to which monomer has been consumed in the polymerization by the time the product polymer is removed.

The proportion of initiator to monomer does not surprisingly govern the absolute size of Mw and the spread of molecular weights because even with a reduced total percentage of chlorate/bisulphite (relative to monomer) (which might otherwise have been expected to increase the polymer molecular weight and spread of molecular weights), the molecular weight of the polymer and spread of molecular weights can be maintained, the size and spread depending on the amount of chain transfer agent    Use of these low proportions of metabisulphite to chlorate and low total chlorate/bisulphite percentages often also gives rise to very low proportions of unreacted monomer in the polymeric product, i.e. very high conversions.

The monomer component, initiator and terminator are reacted in aqueous solution usually at pH 0.5-4.0 e.g. 1-2.5 and usually with up to a maximum of 10ppm iron e.g. up to 5ppm. In the solution the solvent is substantially only water, but may contain up to 20% by weight of a water miscible organic solvent such as acetone, methanol, ethanol, isopropanol or methylated spirits or a lower glycol or polyol of 2-6 carbon atoms e.g. ethylene glycol or glycerol, or an hydroxy ethylenated alkanol or glycol e.g. diethylene glycol or ethylene glycol mono methyl or ethyl ether. Lower alcohols, such as isopropanol also act as chain transfer agents, though in amounts of 20-80 mole % (based on the number of moles of monomer component).

In the polymerization the metabisulphite solution is added with cooling to an agitated aqueous solution of monomer component, chlorate and chain terminator. Strong cooling is often needed when the first part of the total metabisulphite is added to the chlorate solution, while in the later parts of the addition temperature control is much easier.

A portion of the metabisulphite may be added to a mixture of a portion of each of the monomer component, chlorate and chain terminator (the monomer and terminator in fixed proportion) which are reacted and then a second mixture of the monomer component, chlorate and chain terminator in the same proportions as before is added followed by a further portion of the metabisulphite solution and, if desired then again, a third mixture of monomer, chlorate and chain transfer agent and a third portion of metabisulphite and so on with subsequent portions if desired. This sequential addition with a total of e.g. 2-6 additions of fractions of the total amounts being added each time makes control of the polymerization e.g. control of temperature and mixing much easier than in 1 step. In each addition the proportions of the reagents monomer component and chain transfer agent must be kept constant or else the final product will tend to have a broader spread of molecular weights.

Very advantageously all the monomer component, chain terminator and chlorate are mixed first to give said aqueous solution, to which is then added the metabisulphite solution causing the molar ratio of chlorate to metabisulphite added to decrease progressively during the reaction. The metabisulphite solution may be added continuously or alternatively, continually in at least 2 (preferably at least 5) steps usually 2-20 steps with addition of small discrete portions portion in each step. By this means the rate of generation of heat on each addition can be reduced thereby maximizing heat control, and/or enabling cheaper and less effective cooling means to be used and possible errors due to addition of variable incorrect proportions of monomer and thiol, which would greatly affect the molecular weight, can be avoided. Advantageously the proportion of chlorate to metabisulphite that has been added by the end of the first step of a multistep addition is at least 15 : 1 e.g. at least 30 : 1 and after the end of the last step of addition, the molar ratio is less than 10 : 1 e.g. less than 5 : 1. In the stepwise addition of metabisulphite, the same amount of metabisulphite (relative to total chlorate) may be added each time, but optimum heat control may be achieved by addition of a very small amount of metabisulphite in the first step and increasingly large amounts with succeeding stages e.g. with the amounts increasing logarithmically. In each step the temperature initially rises on addition of the metabisulphite but quickly decreases because of the applied cooling, further metabisulphite being added when the temperature has reduced sufficiently to cope with the exotherm when the next portion of metabisulphite is added; if only very small portions are being added, then of course the reduced temperature need not be as low as when larger proportions are added (and hence the next addition can be sooner). Hence the number of steps of addition and the amount of metabisulphite added each time are inversely proportional and are governed by the size of the reactor or reactors and their heat capacity, scale of operations, efficiency of the cooling means as well as the desired reaction time. However it is preferable that the reaction temperature is maintained in the range 75-110°C. The metabisulphite solution may even be added slowly, but continuously in lieu of stepwise addition so long as the heat evolution can be controlled. A further benefit of the continuous or continual progressive addition to all the monomer, chlorate and chain transfer agent is that after each portion of bisulphite has been added the polymerization apparently proceeds so far and stops unless further bisulphite is added; in this way the free monomer content of the final product polymer can be adjusted. While the monomer, terminator and chlorate may be mixed in any order before addition of metabisulphite, preferably the terminator, e.g. thiol, is added to the monomer, and then the chlorate added, followed by the sulphuroxy species

In a preferred process, to an aqueous soultion comprising all the acrylic acid, all the sodium chlorate and all the chain terminator, is added in at least 5 portions an aqueous solution of sodium metabisulphite while the temperature is maintained at 75-110°C, the proportion of sodium chlorate to sodium metabisulphite added in the first portion being at least 30:1, the proportion of total sodium chlorate to total sodium metabisulphite added being less than 5:1, and the total molar amount of chlorate and metabisulphite to acrylic acid being 0.2-5%.

Polymerization is very exothermic and heat produced is removed by cooling e.g. with a cooling jacket to the vessel or a cooling coil therein or with an external heat exchanger such as simple and multiple surface exchangers and coil exchangers, preferably of the thin film type as in plate heat exchangers.

The reaction time in the reaction is usually 10 min to 5 hrs. depending on the heat transfer capacity of the equipment and the rate of heat evolution; increasing the reaction time usually increases the degree of conversion. The reaction temperature is usually 40-140°C e.g. 50-120°C e.g. 75-110°C. The process may be carried out under less than atmospheric, at substantially atmospheric or more than atmospheric pressure e.g. up to 3kg/cm$^2$. Preferably the pressure is substantially atmospheric, though the higher pressure may be used to keep the polymerization solution liquid and stop it from boiling.

The reaction time, reaction rate, temperature and nature and amount of monomer component, initiator and terminator are usually chosen so that at least 90% e.g. at least 95% or 98% of the polymerization occurs within the reaction time as this usually results in the narrowest molecular weight distributions.

The product of the polymerization comprises an aqueous
solution of the polymer, and usually unreacted monomer, in amount
e.g. up to 10% or up to 5% (such as 0.005-5% or 0.1-2% or 0.005-0.7%
based on the total moles of the monomer charged to the reaction.
However the content of unreacted monomer may be reduced by a further
ageing period of 2-60 mins. at 50-110°C e.g. 75-110°C without
addition of further initiator. At the end of the polymerization the
residual chlorate content may be reduced if desired by addition of
further metabisulphite.

The product polymer, a homo or copolymer of acrylic acid may
be isolated e.g. by precipitation with an organic solvent but is
usually sold as such in aqueous solution, or after concentration to
at least 50% concentration if desired, though this is often not
necessary.

The aqueous polymer mixture which may otherwise be at pH 2-4
may be treated with base e.g. ammonia or an alkali metal (e.g.
sodium) hydroxide or carbonate or an alkanolamine such as aqueous
sodium hydroxide to form an aqueous solution of a salt of the
polymer e.g. one containing 10-65% such as 35-55% e.g. 40-55% by
weight of said salt, at a pH of 6-8 or higher. Thus 5-20% or 70-90%
of the acid groups in the polymeric acid may be neutralized.

Preferably at a time before neutralization with base, a thiol
free complexing agent for iron such as a water soluble di or tri
carboxylic acid or salt (e.g. a sodium salt) thereof usually an
aliphatic one with 2-10 carbon atoms and an amino, imino, nitrilo
or hydroxyl substitutent or substituents such as ethylene diamine
tetraacetic acid gluconic acid or nitrilo triacetic acid is present
in amounts up to 500ppm e.g. 10-100ppm ; the complexing agent may be
added with the base or during or before the polymerization.

The polymer of the invention is a water soluble homo polymer
of acrylic acid, or copolymer of acrylic acid and up to 30 mole %
of a copolymerizable monomer (based on the total molar amount of
acrylic acid and copolymerizable monomer). The polymer may have free carboxyl groups or at least some of them such as substantially all of them may be in the form of carboxylate groups, with associated ammonium, alkali metal or alkanolamine (of 2-8 carbons such as mono, di and triethanol amine) cations, so that the polymer is soluble in water at 40% concentration at pH 6-8. The polymer is preferably in the form of its sodium salt. The weight average molecular weight ($M_w$) of the sodium salt form of the polymer at pH 7.2 in 42% aqueous concentration is less than 30,000 e.g. less than 25,000 such as 1000-30,000 or 1000-25000, e.g. 1000-4000 for water treatment uses 4000-10,000 for suspending minerals and 10,000-18,000 for pumpable slurries. All molecular weights in this specification are values obtained by gel permeation chromatography by comparison with dextran standards obtained from Pharmacia, Upsala, Sweden and monomeric pure chemicals. The value of $M_w$ divided by $M_n$ (the number average molecular weight) is usually less than 2.3, such as less than 2.2, e.g. less than 2.0 such as 1.3 - 2.2 (or 1.3 - 2.0) and usually 1.6 - 1.9. particularly for products of $M_w$ of 2000-11000 especially 2000-7000. The value of $M_z$ (the third order molecular weight) to $M_w$ is less than 2.0 e.g. less than 1.9 such as 1.3-2.0 or 1.5-1.9. Polymers with a particularly preferred combinations have $M_w/M_n$ of 1.6 - 1.9 and $M_z/M_w$ of 1.5 - 1.9. Advantageously the sum of $M_w/M_n$ and $M_z/M_w$ is 2.6 - 4.0 in particular 3-3.9 and especially 3.4-3.9 or 3.4 - 3.8.

The lower molecular weight ($M_w$) polymers are particularly useful in water treatment for boilers, cooling water, desalination plants and oil well flooding where they act as inhibitors of the deposition of insoluble inorganic solids e.g. scale and/or sea water solids amounts of polymer of 5-500 e.g. 10-60ppm may be used, preferably mixed with acetodiphosphoric acid in a 3 : 1 ratio. The medium molecular weight polymers (4000-10,000 $M_w$) may be used in the refining of minerals e.g. China Clay, in which refining they act as dispersants or deflocculants; amounts of 0.001-2% e.g. 0.002-1% of polymer based on dry mineral weight may be used. The higher molecular weight polymers ($M_w$ 10,000-18,000) may be used in the dispersion of fillers, pigments and minerals in aqueous systems to yield slurries of high solids contents, these slurries being stable and capable of being pumped; amounts of 500-18000 ppm polymer based on total slurry may be used.   All the polymers, including those of the highest molecular weight can be used in the refining of talc (using procedures as described in our UK Patent No. 2019824 and with amounts of 0.1-2% e.g. 0.2-1% of polymer based on dry talc), and used in detergents as anti redeposition agents and/or sequestering agents for calcium and magnesium.

The invention is illustrated in the following Examples.

## Example 1

Into a vessel fitted with stirrer, jacket containing circulating water at constant temperature, condenser and dropping funnel, were charged, water (300g, 16.66 mole) glacial acrylic acid (300g. 4.16 moles containing 200 ppm hydroquinone monomethyl ether and less than 1% by weight water) disodium ethylenediamine tetra acetic acid (33mg, 50 ppm EDTA ) 2-mercaptoethanol (30g. 0.484 mole) and sodium chlorate solution (30 ml of 250g/1 solution i.e. 0.0705 mole). Based on the number of moles of acrylic acid, the molar % of mercaptoethanol was 11.63% and that of sodium chlorate 1.69%. The liquid in the vessel was stirred vigorously and its temperature raised to 80°C and the jacket kept at 80°C by means of the constant temperature water.  Sodium metabisulphite solution (340g/1, 1.79M) was added in 1 ml portions, with vigorous stirring and maintenance of the temperature at 80-100°C and a sample of the solution analysed by liquid phase chromatography to determine its free acrylic acid content and hence the % conversion. Results were as follows.

12

| Total mls MBS Solution | % Free monomer | % conversion | Molar ratio NC : MBS |
|---|---|---|---|
| 1 | 25.5 | 43.8 | 39.4 : 1 |
| 2 | 19.1 | 57.8 | 19.7 : 1 |
| 3 | 10.1 | 77.7 | 13.1 : 1 |
| 4 | 6.6 | 85.5 | 9.8 : 1 |
| 5 | 4.8 | 89.5 | 7.9 : 1 |
| 6 | 1.5 | 96.6 | 6.6 : 1 |
| 7 | 0.93 | 98.0 | 5.6 : 1 |
| 8 | 0.69 | 98.5 | 4.9 : 1 |
| 9 | 0.36 | 99.2 | 4.4 : 1 |
| 10 | 0.21 | 99.5 | 3.9 : 1 |
| 11 | 0.07 | 99.8 | 3.4 : 1 |
| 12 | <0.05 | 100 | 3.3 : 1 |

For the product obtained after addition of the 12mls of MBS solution, gel permeation chromatography gave Mn of 1355, Mw of 3258 and Mw/Mn of 2.40.

## Example 2

The process of Ex. 1 was repeated with identical amounts of water, acrylic acid EDTA and mercapto ethanol, but with 15ml only of the sodium chlorate solution (i.e. 0.84 molar % based on acrylic acid). The results were as follows.

| Total mls MBS solution | % Free monomer | % conversion | Molar ratio NC : MBS |
|---|---|---|---|
| 1 | 21.8 | 52.9 | 19.5 : 1 |
| 2 | 10.4 | 77.5 | 9.8 : 1 |
| 3 | 4.5 | 90.3 | 6.5 : 1 |
| 4 | 1.5 | 96.7 | 4.9 : 1 |
| 5 | 0.6 | 98.6 | 3.9 : 1 |
| 7 | 0.25 | 99.4 | 2.8 : 1 |
| 9 | 0.06 | 99.9 | 2.2 : 1 |

Addition of each of the first 4ml MBS solutions gave significant temperature rises of 27.5, 19°, 20° and 10°C respectively, but thereafter the addition of more MBS solution gave only small temperature rises of 1-4°C. The product after addition of the 9mls of MBS solution had Mn of 1528, Mw of 3042 and Mw/Mn of 1.99.

By comparison between Ex. 1 and 2 it will be seen that the use of less chlorate means that for the same conversion (e.g. about 90%) or free monomer content smaller absolute amounts of bisulphite are needed. This is accomplished however with production of a polyacrylate of substantially the same molecular weight but lower $M_w/M_n$ value (i.e. a narrow spread of molecular weights).

## Example 3

The process of Ex. 1 was repeated again with identical amounts of water acrylic acid, EDTA and mercapto ethanol but with only 10ml sodium chlorate solution (0.55 molar % based on acrylic acid) and the temperature maintained at 80-100°C. 1.0 ml of MBS solution was added in a regime of 0.3ml (corresponding to an NC : MBS molar ratio of 42.8 : 1) and then in 0.1ml portions to give a solution with 3.2% free monomer, 93.2% conversion, the final molar ratio of NC to MBS being 12.8 : 1, and the temperature rises on addition of BS being 19.5-9.5°C for the addition of 0.3-0.6 ml respectively and 6.5-4°C thereafter. While this product solution is suitable, as such or after neutralization with sodium hydroxide for some uses e.g. as a thickener in oil recovery procedures, its free monomer content is high for other uses. So a further 1ml of chlorate solution was added and then more MBS solution with the following results.

| Total mls MBS solution | % free monomer | % conversion | Molar ratio NC : MBS |
|---|---|---|---|
| 1.1 | 3.1 | 93.4 | 11.7 : 1 |
| 1.2 | 1.7 | 96.3 | 10.7 : 1 |
| 2.2 | 1.1 | 97.6 | 5.8 : 1 |

14

Temperature rises of $3.5^{\circ}$, $2.5^{\circ}$ and $5.0^{\circ}$C occurred after these additions. A further 4ml of chlorate solution were added (making 15ml in total) and then more NBS solution. (3.2 mls in total) giving 0.7% free monomer, 98.4% conversion at a 4 : 1 NC : MBS ratio, while 4.2 ml in total gave 0.54 % free monomer 98.8% conversion and a 3.0 : 1 NC : MBS ratio, temperature rises of $2.5^{\circ}$ and $2.0^{\circ}$C occuring on these additions of MBS.

Comparison of the results of Ex. 2 and 3 shows that with smaller amounts of chlorate, smaller amounts of metabisulphite are needed to obtain the same conversion or free monomer content.

Example 4

The process of Ex. 2 was repeated with even smaller additions of sodium metabisulphite solution (1.79M). The results were as follows.

| Total MBS added ml. | % Free Monomer | % conversion | Temp. Rise $^{\circ}$C on addition MBS | Molar Ratio Chlorate:MBS |
|---|---|---|---|---|
| 0.1 | 45.31 | 2.57 | 13.0 | 195.5 : 1 |
| 0.2 | 44.85 | 3.54 | 10.2 | 97.8 : 1 |
| 0.3 | 34.97 | 24.77 | 11.6 | 65.2 : 1 |
| 0.5 | 28.30 | 39.10 | 9.8 | 39.1 : 1 |
| 0.6 | 19.93 | 57.11 | 7.5 | 32.6 : 1 |
| 0.7 | 13.82 | 70.25 | 5.2 | 27.9 : 1 |
| 0.8 | 8.96 | 80.71 | 3.1 | 24.4 : 1 |
| 0.9 | 5.63 | 87.87 | 2.9 | 21.7 : 1 |
| 1.0 | 3.76 | 91.9 | 1.5 | 19.6 : 1 |
| 1.1 | 3.34 | 92.8 | 1.5 | 17.8 : 1 |
| 1.2 | 2.16 | 95.3 | 0.9 | 16.3 : 1 |
| 1.3 | 0.782 | 98.3 | 0.1 | 15.0 : 1 |
| 1.4 | 0.510 | 98.9 | 0.1 | 14.0 : 1 |
| 1.5 | 0.435 | 99.1 | 0 | 13.0 : 1 |
| 1.6 | 0.332 | 99.3 | 0 | 12.2 : 1 |

The product of addition of 1.6ml MBS solution was treated with 47wt.% sodium hydroxide solution to give a solution of the sodium salt of the polymer at pH 7.01 with 0.021% sodium acrylate, Mn of 2766, Mw of 4667 and Mw/Mn of 1.69.

## Examples 5-7

The process of Example 3 was repeated using solutions from equimolar amounts of each of sodium sulphite, sodium bisulphite and sodium dithionite instead of the sodium metabisulphite. Extensive polymerization occurred in each case to form solutions of polyacrylic acid of low monomer content.

0097063

CLAIMS

1.  A process for preparing a water soluble polymer, having repeating units derived from a monomer component, which comprises at least 70 molar % of acrylic acid and optionally up to 30 molar % of copolymerizable monomer, characterised in that, to an aqueous solution comprising said monomer component a free radical chain terminator and an ammonium or alkali metal chlorate, is added an aqueous solution comprising a sulphur oxy species derived from sulphurous acid, to form a reaction solution in which polymerization occurs and then further solution comprising said sulphur oxy species is added to cause further polymerization and the process repeated to form an aqueous solution of the said polymer.

2.  A process according to claim 1 characterised in that the monomer component is acrylic acid and the sulphur oxy species is sodium metabisulphite.

3.  A process according to claim 1 or 2 characterised in that the chain terminator is a thiol compound.

4.  A process according to claim 3 characterised in that the chain terminator is 2-mercaptoethanol.

5.  A process according to any one of claims 2-4 characterised in that the total molar percentage of chlorate and metabisulphite to monomer component is 0.2-5%.

6.  A process according to any one of claims 1-5 characterised in that the total molar ratio of chlorate to the total of metabisulphite or other sulphur oxy species, that has been added by the end of addition of the metabisulphite or other sulphur oxy species, is 2-20:1.

7.  A process according to any one of claims 1-7 characterised in that the sulphur oxy species is added at such a rate while keeping the reaction solution at $75-110^{\circ}C$.

8. A process accordint to any of claims 1-7 characterised in that the sulphur oxy species is added in more than one discrete portion, and the molar ratio of chlorate in the reaction solution to metabisulphite or other sulphur oxy species added in the first discrete portion thereof is at least 30:1.

9. A process according to any one of claims 1-8 characterised in that the sulphur oxy species is added to an aqueous solution of all the monomer component, all the chlorate and all the terminator.

10. A process according to any one of claims 1-8 characterised in that the sulphur oxy species is added to an aqueous solution comprising a portion of each of the total monomer, total chlorate and total terminator, which are reacted, a further portion of each of the monomer, chlorate and terminator is added, and the process repeated at least once more, the proportion of terminator to monomer being fixed.

11. A process according to claim 9 wherein to an aqueous solution comprising all the acrylic acid, all the sodium chlorate and all the chain terminator, is added in at least 5 portions, an aqueous solution of sodium metabisulphite while the temperature is maintained at 75-110°C, the proportion of sodium chlorate to sodium metabisulphite added in the first portion being at least 30:1, the proportion of total sodium chlorate to total sodium metabisulphite added being less than 5:1, and the total molar amount of chlorate and metabisulphite to acrylic acid being 0.2-5%.

12. A water soluble polymer prepared by a process as claimed in any one of claims 1-11.

0097063

European Patent
Office

**EUROPEAN SEARCH REPORT**

Application number

EP  83 30 3497

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int. Cl. ³) |
| Y | FR-A-1 551 553   (CHATILLON) <br> * Claims 1 * | 1-12 | C 08 F   20/06 <br> C 08 F    2/10 |
| D,Y | US-A-3 665 035   (M.C. RICE et al.) <br> * Claim 1 * | 1-12 | |

TECHNICAL FIELDS
SEARCHED (Int. Cl. ³)

C 08 F

The present search report has been drawn up for all claims

| Place of search <br> THE HAGUE | Date of completion of the search <br> 30-09-1983 | Examiner <br> CAUWENBERG C.L.M. |
|---|---|---|

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503. 03.82